# EUROPÄISCHE PATENTSCHRIFT

(11) **EP 2 874 879 B1**
(45) Veröffentlichungstag und Bekanntmachung des Hinweises auf die Patenterteilung: **10.08.2016**
(21) Anmeldenummer: 13732119.6
(22) Anmeldetag: 21.06.2013
(51) Int. Cl.: B64D 11/04, B64D 13/06

(54) **KÜHLKONZEPT KALTLUFTDUSCHE**
COOLING CONCEPT COLD AIR SHOWER
DOUCHE À AIR FROID DANS LAQUELLE EST MIS EN OEUVRE UN CONCEPT DE RÉFRIGÉRATION

(30) Priorität: 20.07.2012 US 201261673855 P
(43) Veröffentlichungstag der Anmeldung: 27.05.2015
(73) Patentinhaber: Sell Gmbh, 35745 Herborn (DE)
(72) Erfinder: WEIXLER, Frank, Rabenau 35466 (DE)
(74) Vertreter: Grosse, Wolf-Dietrich Rüdiger
(86) Internationale Anmeldenummer: PCT/EP2013/063054
(87) Internationale Veröffentlichungsnummer: WO 2014/012746

(56) Entgegenhaltungen:
- US-A- 4 361 014
- US-A- 4 969 509
- US-A1- 2005 210 910
- US-A1- 2008 001 031
- US-A1- 2011 067 838

## Beschreibung

### 1. Gebiet der Erfindung

Die Erfindung betrifft eine Flugzeuggalley, umfassend wenigstens ein Kühlkompartiment zur Aufnahme eines oder mehrerer Container für zu kühlende Versorgungsgüter. Derartige Container können jede Art von Einschubkästen, Tabletts oder Trolleys sein, wie sie üblicherweise in der Flugzeugindustrie zur Bestückung der Galleys Verwendung finden.

### 2. Stand der Technik

In Flugzeugen erfolgt die Versorgung der Reisenden, insbesondere die Bereitstellung von Versorgungsgütern wie Getränken und Speisen, mittels so genannter Flugzeuggalleys, die eine Vielzahl von Kompartimenten aufweisen, in die Versorgungsgüter je nach Bedarf eingestellt werden können. Diese Versorgungsgüter werden üblicherweise für jeden Flug in so genannten Trolleys, fahrbaren Containern, an das Flugzeug angeliefert und dann in die dafür vorgesehenen Kompartimente in der Flugzeuggalley eingeschoben und dort ggf. gegen Herausfallen gesichert. Diejenigen Container, die verderbliche Ware enthalten oder deren Inhalt aus anderen Gründen gekühlt werden soll, weisen entweder eigene Kühlaggregate auf oder müssen innerhalb der Flugzeuggalley auf andere Weise gekühlt werden.

Aus der Praxis sind daher bereits eine Vielzahl von Einrichtungen bekannt, mittels derer die Kühlkompartimente gekühlt werden können, wie zum Beispiel in den Dokumenten US4969509, US20050210910, US4361014, US2011006838 und US20080001031 offenbart. Der Aufbau dieser Kühleinrichtungen ist jedoch üblicherweise sehr aufwendig und erlaubt zudem keinen kurzfristigen Umbau der Flugzeuggalley abhängig von sich ändernden Bedürfnissen. Zudem wird regelmäßig angestrebt, die Kühlung der Kühlkompartimente gleichmäßig über die gesamte Breite und gesamte Tiefe des Kühlkompartiments sicherzustellen, was in der Praxis nur mit sehr aufwendigen Mitteln gewährleistet werden kann.

### 3. Aufgabe der Erfindung

Es war daher eine Aufgabe der Erfindung, eine Flugzeuggalley zu schaffen, die die Kühlung eines zu kühlenden Kompartiments mit einfachen, leicht beherrschbaren und leichter an neue Gegebenheiten anpassbaren Mitteln bewirkt. Diese Aufgabe wird im erfindungsgemäßen Sinne mittels einer Flugzeuggalley, umfassend die Merkmale des Anspruchs 1, gelöst. Vorteilhafte Ausgestaltungen der Erfindung sind in den abhängigen Ansprüchen niedergelegt.

### 4. Zusammenfassung der Erfindung

Im erfindungsgemäßen Sinne ist an der Rückseite der Galley wenigstens ein mit einer Abluftabfuhr verbundenes, erstes Paneel angeordnet, in dem wenigstens eine Abluftleitung und wenigstens eine zum Kühlkompartiment hin ausgerichtete Abluftöffnung vorgesehen sind. Des Weiteren ist an der Oberseite des Kühlkompartiments ein zweites Paneel angeordnet, das mit einer Kühlluftquelle verbunden ist und sich zumindest über die Breite des Kühlkompartiments erstreckt, wobei in dem zweiten Paneel mehrere Kühlluftöffnungen zur gezielten Zuleitung von Kühlluft in das Kühlkompartiment vorgesehen sind.

Im erfindungsgemäßen Sinne erfolgt somit die Kühlung des Kühlkompartiments über die gezielte Zufuhr und Abfuhr von Kühlluft in das Kühlkompartiment hinein und aus diesem heraus, wodurch die Kühlluft die im Kühlkompartiment zu kühlenden Güter, beispielsweise Container oder dergleichen, in gezielter Weise und vorzugsweise vollständig umströmt. Die Kühlluft wird dabei von oben in das Kühlkompartiment über das zweite Paneel eingebracht und, nachdem sie das im Kühlkompartiment zu kühlende Gut abgekühlt und sich entsprechend erwärmt hat, über das erste Paneel als Abluft abgeführt. Somit wird im erfindungsgemäßen Sinne ein vorzugsweise dauerhafter Kühlluftstrom innerhalb des Kühlkompartiments aufrechterhalten.

Der paneelartige Aufbau der Kühlung erlaubt zudem die Kühlung des Kühlkompartiments mit besonders einfachen und platzsparenden Mitteln, um den Stauraum im Kühlkompartiment gegenüber nicht gekühlten Kompartimenten nur geringfügig einzuschränken. Ein derartiger Aufbau erlaubt vorzugsweise auch einen kurzfristigen Umbau der Flugzeuggalley beispielsweise dann, wenn mehr oder weniger Kühlkompartimente als beim vorhergehenden Einsatz des Flugzeugs erforderlich werden.

Es wird in einer ersten Ausführungsform der Erfindung bevorzugt, wenn sich das zweite Paneel nicht nur über die gesamte Breite, sondern auch über die Tiefe des Kühlkompartiments erstreckt. Somit wird eine Flugzeuggalley geschaffen, die die gezielte Zufuhr von Kühlluft in das Kühlkompartiment flächig und vorzugsweise gleichmäßig, quasi in der Form eines Kühlluft-Wasserfalls, der das zu kühlende Gut vollständig umhüllt, ermöglicht.

Es wird insbesondere bevorzugt, wenn die Abluftöffnungen im ersten Paneel ausschließlich an der Unterseite des Kühlkompartiments, vorzugsweise gleich verteilt über die Breite des ersten Paneels, angeordnet sind. Hierdurch wird eine Flugzeuggalley geschaffen, bei der der Kühlluftstrom über das zweite Paneel von oben durch das gesamte Kühlkompartiment hindurch bis zur Unterseite des Kühlkompartiments am gesamten Kühlgut entlangströmt, um hierdurch eine maximale Kühlleistung erbringen zu können. Die Abluft wird dann, nachdem die Kühlluft am gesamten Kühlgut entlanggeströmt ist, an der Unterseite des Kühlkompartiments vorzugsweise gleichmäßig über das erste Paneel abgezogen.

Es wird insbesondere bevorzugt, wenn die wenigstens eine Abluftleitung im ersten Paneel seitlich in dem Paneel angeordnet ist. Durch diese Ausgestaltung der Erfindung wird sichergestellt, dass die erwärmte Abluft das Paneel nicht flächig erwärmt, so dass ein Einfluss auf das Kühlkompartiment durch eine partielle Erwärmung des ersten Paneels auf ein Minimum beschränkt bleibt.

Es wird in einer weiteren Ausführungsform der Erfindung bevorzugt, wenn die Kühlluftöffnungen gleich verteilt über die Breite und Tiefe des zweiten Paneels angeordnet sind. Hierdurch wird ein gleichmäßiger Energieeintrag in das Kühlkompartiment und eine gleichmäßige Umströmung des zu kühlenden Versorgungsguts gewährleistet.

In einer alternativen, aber ebenso bevorzugten Ausführungsform der Erfindung sind Kühlluftöffnungen im zweiten Paneel zumindest an der der Vorderseite des Kühlkompartiments zugewandten Seite des zweiten Paneels mit erhöhter Anzahl pro Flächen- oder Längeneinheit und / oder größerer Durchtrittsfläche für die Kühlluft vorgesehen. Hierdurch wird eine Kühlung geschaffen, bei der die Vorderseite des Kühlkompartiments stärker gekühlt werden kann als dessen Rückseite, wodurch sichergestellt werden kann, dass auch beim Öffnen des Kühlkompartiments durch das Bedienpersonal keine wesentliche Erwärmung des vorderen Bereichs des Kühlkompartiments eintritt, diese zumindest schnellstmöglich nach Schließen des Kühlkompartiments wieder ausgeglichen werden kann.

In einer weiteren bevorzugten Ausführungsform der Erfindung erfolgt die Verbindung von erstem und zweiten Paneel mit der Kühlluftquelle bzw. einem Abluftspeicher, vorzugsweise einem Wärmetauscher, über flexible Schläuche. Hierdurch wird eine Flugzeuggalley geschaffen, bei der die Anbindung der Kühlpaneele an externe Kühlluftquellen und Abluftspeicher besonders einfach und variabel gelöst werden kann. Die flexiblen Schläuche können dabei nahezu beliebig und auch über große Längen entlang der Flugzeuggalley oder anderer Stützstrukturen zu den für die Kühlung erforderlichen Aggregaten geführt werden.

Es wird insbesondere bevorzugt, wenn die Kühlluftquelle an der Oberseite der Flugzeuggalley angeordnet ist. Überaus bevorzugt wird, wenn der Abluftspeicher, vorzugsweise ein Wärmetauscher, ebenfalls an der Oberseite der Flugzeuggalley angeordnet ist. Hierdurch wird eine Flugzeuggalley geschaffen, die besonders platzsparend baut und bei der die Anbindung des Kühlkompartiments an die Versorgungsaggregate besonders einfach verwirklicht werden kann. Insbesondere kann die Kühlluftquelle mit einer Mehrzahl von Kühlluftkompartimenten und / oder Paneelen verbunden werden. Besonders bevorzugt wird, wenn an der Oberseite der Flugzeuggalley ein Anschluss für die bordeigene Versorgung mit Kühlluft vorgesehen ist.

Es wird in einer weiteren Ausführungsform der Erfindung bevorzugt, wenn die Tiefe des ersten Paneels 4,57 cm (1,8 Inch), vorzugsweise 4,32 cm (1,7 Inch), nicht übersteigt. Es wird des Weiteren bevorzugt, wenn die Höhe des zweiten Paneels 4,57 cm (1,8 Inch), vorzugsweise 4,32 cm (1,7 Inch), nicht übersteigt. Hierdurch wird eine Flugzeuggalley geschaffen, bei der der Kühlraum des Kühlkompartiments, in den die Versorgungsgüter eingeschoben werden können, möglichst groß ist und durch die Paneele nur geringfügig eingeschränkt wird.

Es wird insbesondere bevorzugt, wenn die freie Tiefe des Kühlkompartiments mindestens 86,36 cm (34 Inch) beträgt. Hierdurch wird eine Flugzeuggalley geschaffen, die bei uneingeschränkter Kühlleistung ein Kühlkompartiment bereitstellt, das zur Aufnahme üblicher Container wie Trolleys geeignet ist. Insbesondere ein kurzfristiger Umbau eines nicht gekühlten Kompartiments zu einem Kühlkompartiment wird mit dem paneelartigen Aufbau mit besonders einfachen Mitteln gewährleistet.

Es wird überdies bevorzugt, wenn zwei oder mehr Kühlkompartimente mit einem einzigen ersten Paneel, vorzugsweise jedoch mit jeweils einem eigenen zweiten Paneel, verbunden sind. Hierdurch wird eine Flugzeuggalley zur Verfügung gestellt, bei der die Kühlluftzufuhr für jedes Kühlkompartiment separat steuerbar ist, die Abluftabfuhr jedoch mit einem Minimum von Baukomponenten verwirklicht werden kann.

### 5. Kurze Beschreibung der Figuren

Die Erfindung wird nachfolgend unter Bezugnahme auf zwei Figuren näher erläutert, in denen eine bevorzugte Ausführungsform der Erfindung dargestellt ist.
- Figur 1: zeigt eine explosionsartige Darstellung einer erfindungsgemäßen Flugzeuggalley, und
- Figur 2: zeigt eine schematische Ansicht einer erfindungsgemäßen Flugzeuggalley in einem zusammengebauten Zustand.

### 6. Detaillierte Beschreibung der Figuren

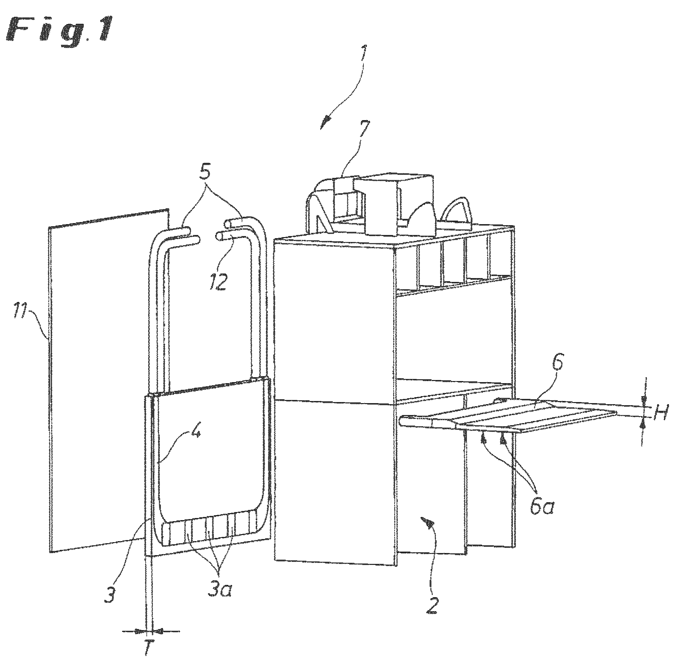

Figur 1 zeigt eine Explosionsdarstellung einer erfindungsgemäßen Flugzeuggalley, in der ein Kühlkompartiment 2 links unten vorgesehen ist. Dieses Kühlkompartiment 2 dient zum Einschieben eines Trolleys mit zu kühlenden Versorgungsgütern, wobei der (nicht dargestellte) Trolley Standardabmessungen aufweisen kann. An der Rückseite der Galley 1, somit zwischen dem Kühlkompartiment 2 und einer die Flugzeuggalley 1 abschließenden Rückwand 11, ist ein erstes Paneel 3 angeordnet, das an seiner Unterseite eine Reihe von Öffnungen 3a zum Abziehen von Abluft aufweist. Diese Abluft wird in zwei seitlich an dem Paneel 3 entlanglaufenden Abluftleitungen 4 gesammelt, die in Wirkverbindung mit einer schlauchförmigen Abluftabfuhr 5 stehen. Über die Abluftabfuhr 5 steht das erste Paneel mit einer Kühlluftquelle 7 und einem Abluftspeicher in Wirkverbindung. Das erste Paneel 3 weist eine Tiefe T von nicht mehr als 4,32 cm auf. Die Kühlluftzufuhr in das Kühlkompartiment 2 erfolgt über ein zweites Paneel 6, dessen Höhe H ebenfalls 4,32 cm nicht übersteigt. An der Unterseite des zweiten Paneels 6 sind eine Vielzahl von Kühlluftöffnungen 6a angeordnet, über die Kühlluft, welche über Schläuche 12 von der Kühlluftquelle 7 zum zweiten Paneel 6 zugeführt werden, kaltluftduschenartig oder wasserfallartig in das Kühlkompartiment 2 einströmen kann. Die Kühlluft verläuft somit von oben nach unten durch das Kühlkompartiment 2 hindurch und strömt vorzugsweise vollständig entlang der im Kühlkompartiment 2 gespeicherten Versorgungsgüter, bis sie unten über die Abluftöffnungen 3a aus dem Kühlkompartiment 2 hinaus und über das erste Paneel 3 von dem Kühlkompartiment 2 wegbefördert wird.

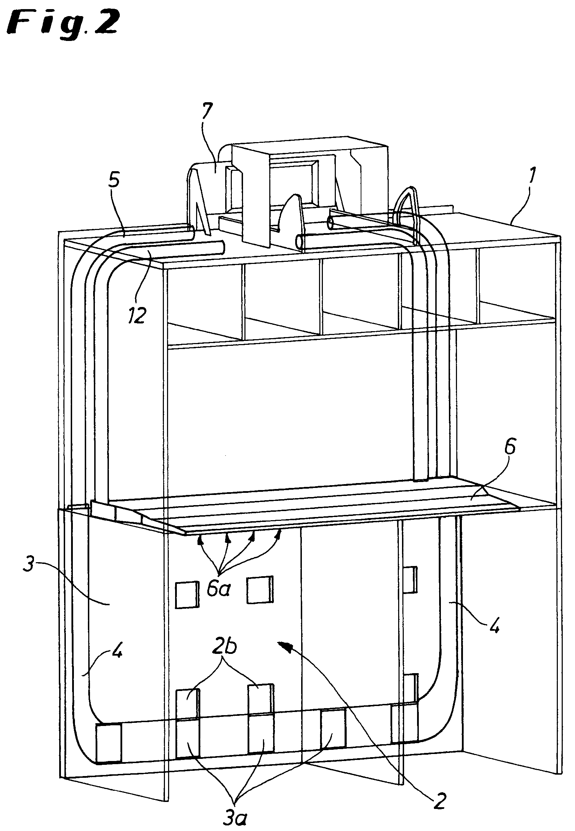

Figur 2 zeigt die erfindungsgemäße Flugzeuggalley 1 in einem zusammengebauten Zustand mit an dem Kühlkompartiment 2 angeordnetem ersten Paneel 3 und zweiten Paneel 6. An der Unterseite des zweiten Paneels 6 sind eine Vielzahl von Kühlluftöffnungen 6a angeordnet, über die die Kühlluft von der Kühlluftquelle 7 über die Kühlluftzufuhr in Form von zwei flexiblen Schläuchen 12 in das Kühlkompartiment 2 hineinbefördert werden kann. Es wird ermöglicht, dass standardisierte erste Paneele 3 für eine Vielzahl von Kühlkompartimenten 2 unterschiedlicher Breite verwendet werden können, beispielsweise wie in der dargestellten Form, bei der ein erstes Paneel 3 zwei benachbarte Kompartimente der Flugzeuggalley 1 abdeckt, ein zweites Paneel 6 jedoch ausschließlich oberhalb des Kühlkompartiments 2 angeordnet ist. Geeignete Dichtmittel an den Öffnungen 3a dienen zur ungehinderten Abfuhr von Abluft und zur Vermeidung von ungewünschten Nebenströmen.

### Bezugszeichenliste:

- 1: Flugzeuggalley
- 2: Kühlkompartiment
- 3: Paneel
- 3a: Öffnung
- 4: Abluftleitung
- 5: schlauchförmige Abluftabfuhr
- 6: Paneel
- 6a: Kühlluftöffnung
- 7: Kühlluftquelle
- 11: Rückwand
- 12: Schlauch

## Patentansprüche

1. Flugzeuggalley (1), umfassend wenigstens ein Kühlkompartiment (2) zur Aufnahme eines Containers für zu kühlende Versorgungsgüter, wobei an der Rückseite der Galley (1) wenigstens ein mit einer Abluftabfuhr (5) verbundenes, erstes Paneel (3) angeordnet ist, in dem wenigstens eine Abluftleitung (4) und wenigstens eine zum Kühlkompartiment (2) hin ausgerichtete Abluftöffnung (3a) vorgesehen sind, und dass an der Oberseite des Kühlkompartiments (2) ein zweites Paneel (6) angeordnet ist, das mit einer Kühlluftquelle (7) verbunden ist und sich zumindest über die Breite des Kühlkompartiments (2) erstreckt, **dadurch gekennzeichnet, dass** in dem zweiten Paneel (6) mehrere Kühlluftöffnungen (6a) zur gezielten Zuleitung von Kühlluft in das Kühlkompartiment (2) vorgesehen sind.

2. Flugzeuggalley (1) gemäß Anspruch 1, **dadurch gekennzeichnet, dass** das zweite Paneel (6) sich auch über die Tiefe des Kühlkompartiments (2) erstreckt.

3. Flugzeuggalley (1) gemäß einem der voranstehenden Ansprüche, **dadurch gekennzeichnet, dass** die Abluftöffnungen (3a) im ersten Paneel (3) ausschließlich an der Unterseite des Kühlkompartiments (2), vorzugsweise gleich verteilt über die Breite des ersten Paneels (3), angeordnet sind.

4. Flugzeuggalley (1) gemäß einem der voranstehenden Ansprüche, **dadurch gekennzeichnet, dass** die wenigstens eine Abluftleitung (4) im ersten Paneel (3) seitlich in dem Paneel (3) angeordnet ist.

5. Flugzeuggalley (1) gemäß einem der voranstehenden Ansprüche, **dadurch gekennzeichnet, dass** die Kühlluftöffnungen (6a) gleichverteilt über die Breite und Tiefe des zweiten Paneels (6) angeordnet sind.

6. Flugzeuggalley (1) gemäß einem der Ansprüche 1 bis 4, **dadurch gekennzeichnet, dass** die Kühlluftöffnungen (6a) zumindest an der der Vorderseite des Kühlkompartiments (2) zugewandten Seite des zweiten Paneels (6) mit erhöhter Anzahl pro Flächen- oder Längeneinheit und/oder größerer Durchtrittsfläche für die Kühlluft vorgesehen sind.

7. Flugzeuggalley (1) gemäß einem der voranstehenden Ansprüche, **dadurch gekennzeichnet, dass** die Verbindung von erstem (3) und zweitem Paneel (6) mit der Kühlluftquelle (7) und einem Abluftspeicher, vorzugsweise einem Wärmetauscher, flexible Schläuche (9) umfasst.

8. Flugzeuggalley (1) gemäß einem der voranstehenden Ansprüche, **dadurch gekennzeichnet, dass** die Kühlluftquelle (7) an der Oberseite und Unterseite der Flugzeuggalley (1) angeordnet ist.

9. Flugzeuggalley (1) gemäß einem der voranstehenden Ansprüche, **dadurch gekennzeichnet, dass** die Tiefe (T) des ersten Paneels (3) 4,57 cm (1,8 Inch), vorzugsweise 4,32 cm (1,7 Inch) nicht übersteigt.

10. Flugzeuggalley (1) gemäß einem der voranstehenden Ansprüche, **dadurch gekennzeichnet, dass** die Höhe (H) des zweiten Paneels (6) 4,57 cm (1,8 Inch), vorzugsweise 4,32 cm (1,7 Inch) nicht übersteigt.

11. Flugzeuggalley (1) gemäß einem der voranstehenden Ansprüche, **dadurch gekennzeichnet, dass** die freie Tiefe des Kühlkompartiments (2) mindestens 86,36 cm (34 Inch) beträgt.

12. Flugzeuggalley (1) gemäß einem der voranstehenden Ansprüche, **dadurch gekennzeichnet, dass** zwei oder mehr Kühlkompartimente (2) mit einem einzigen ersten Paneel (3), vorzugsweise mit jeweils einem eigenen zweiten Paneel (6), verbunden sind.

## Claims

1. An aircraft galley (1) comprising at least one cooling compartment (2) for receiving a container for foods and/or drinks to be cooled, wherein at least one first panel (3), which is connected to an exhaust air structure (5), is arranged on the rear side of the galley (1) and at least one exhaust air duct (4) and at least one exhaust air opening (3a), which is oriented toward the cooling compartment (2), are provided in said first panel, and wherein a second panel (6), which is connected to a cooling air source (7), is arranged on the upper side of the cooling compartment (2) and extends at least over the width of the cooling compartment (2), **characterized in that** a plurality of cooling air openings (6a) for the specific supply of cooling air to the cooling compartment (2) are provided in the second panel (6).

2. The aircraft galley (1) according to claim 1, **characterized in that** the second panel (6) also extends over the depth of the cooling compartment (2).

3. The aircraft galley (1) according to one of the preceding claims, **characterized in that** the exhaust air openings (3a) in the first panel (3) are exclusively arranged on the underside of the cooling compartment (2), preferably in a uniformly distributed fashion over the width of the first panel (3).

4. The aircraft galley (1) according to one of the preceding claims, **characterized in that** the at least one exhaust air duct (4) in the first panel (3) is arranged laterally in the panel (3).

5. The aircraft galley (1) according to one of the preceding claims, **characterized in that** the cooling air openings (6a) are arranged in a uniformly distributed fashion over the width and depth of the second panel (6).

6. The aircraft galley (1) according to one of claims 1-4, **characterized in that** the cooling air openings (6a) are provided with an increased number per surface or length unit and/or with a greater opening diameter for the cooling air at least on the side of the second panel (6) facing the front side of the cooling compartment (2).

7. The aircraft galley (1) according to one of the preceding claims, **characterized in that** the connection of the first (3) and the second panel (6) to the cooling air source (7) and an exhaust air accumulator, preferably a heat exchanger, comprises flexible hoses (9).

8. The aircraft galley (1) according to one of the preceding claims, **characterized in that** the cooling air source (7) is arranged on the upper side and underside of the aircraft galley (1).

9. The aircraft galley (1) according to one of the preceding claims, **characterized in that** the depth (T) of the first panel (3) does not exceed 4.57 cm (1.8 inch), preferably 4.32 cm (1.7 inch).

10. The aircraft galley (1) according to one of the preceding claims, **characterized in that** the height (H) of the second panel (6) does not exceed 4.57 cm (1.8 inch), preferably 4.32 cm (1.7 inch).

11. The aircraft galley (1) according to one of the preceding claims, **characterized in that** the clear depth of the cooling compartment (2) amounts to at least 86.36 cm (34 inch).

12. The aircraft galley (1) according to one of the preceding claims, **characterized in that** two or more cooling compartments (2) are connected to a single first panel (3), preferably to a respective separate second panel (6).

## Revendications

1. Office d'avion (1), comprenant au moins un compartiment réfrigérant (2) destiné à recevoir un récipient pour des produits d'alimentation à réfrigérer,
dans lequel est disposé sur la face arrière de l'office (1) au moins un premier panneau (3) relié à une sortie d'échappement d'air (5) dans lequel sont prévus au moins une conduite d'échappement d'air (4) et au moins un orifice d'échappement d'air (3a) dirigé vers le compartiment réfrigérant (2) et qu'est disposé sur le dessus du compartiment réfrigérant (2) un second panneau (6) qui est relié à une source d'air réfrigérant (7) et s'étend au moins sur la largeur du compartiment réfrigérant (2), **caractérisé en ce que** sont prévus dans le second panneau (6) plusieurs orifices à air réfrigérant (6a) pour l'acheminement ciblé d'air réfrigérant dans le compartiment réfrigérant (2).

2. Office d'avion (1) selon la revendication 1, **caractérisé en ce que** le second panneau (6) s'étend aussi sur la profondeur du compartiment réfrigérant (2).

3. Office d'avion (1) selon une des revendications précédentes, **caractérisé en ce que** les orifices d'échappement d'air (3a) sont disposés dans le premier panneau (3) exclusivement sur le dessous du compartiment réfrigérant (2), de préférence répartis régulièrement sur la largeur du premier panneau (3).

4. Office d'avion (1) selon une des revendications précédentes, **caractérisé en ce que** l'au moins une conduite d'échappement d'air (4) est disposée dans le premier panneau (3) dans le côté du panneau (3).

5. Office d'avion (1) selon une des revendications précédentes, **caractérisé en ce que** les orifices à air réfrigérant (6a) sont disposés répartis régulièrement sur la largeur et la profondeur du second panneau (6).

6. Office d'avion (1) selon une des revendications 1 à 4, **caractérisé en ce que** les orifices à air réfrigérant (6a) sont prévus au moins sur la face tournée vers la face avant du compartiment réfrigérant (2) du second panneau (6) en un nombre accru par unité de surface ou de longueur et/ou avec une plus grande surface de passage pour l'air réfrigérant.

7. Office d'avion (1) selon une des revendications précédentes, **caractérisé en ce que** la liaison du premier (3) et du second panneau (6) avec la source d'air réfrigérant (7) et un accumulateur d'air d'échappement, de préférence un échangeur de chaleur, comprend des tuyaux flexibles (9).

8. Office d'avion (1) selon une des revendications précédentes, **caractérisé en ce que** la source d'air réfrigérant (7) est disposée sur le dessus et le dessous de l'office d'avion (1).

9. Office d'avion (1) selon une des revendications précédentes, **caractérisé en ce que** la profondeur (T) du premier panneau (3) ne dépasse pas 4,57 cm (1,8 pouces), de préférence 4,32 cm (1,7 pouces).

10. Office d'avion (1) selon une des revendications précédentes, **caractérisé en ce que** la hauteur (H) du second panneau (6) ne dépasse pas 4,57 cm (1,8 pouces), de préférence 4,32 cm (1,7 pouces).

11. Office d'avion (1) selon une des revendications précédentes, **caractérisé en ce que** la profondeur libre du compartiment réfrigérant (2) est d'au moins 86,36 cm (34 pouces).

12. Office d'avion (1) selon une des revendications précédentes, **caractérisé en ce que** deux compartiments réfrigérants ou plus (2) sont reliés à un seul premier panneau (3), de préférence à respectivement un second panneau spécifique (6).
